# EUROPEAN PATENT APPLICATION

(11) **EP 4 797 653 A1**
(43) Date of publication of application: **26.08.2026**
(21) Application number: 24884406.0
(22) Date of filing: 12.10.2024
(51) Int. Cl.: H04L 49/90

(54) **DATA STORAGE METHOD AND APPARATUS, DEVICE, AND COMPUTER READABLE STORAGE MEDIUM**

(30) Priority: 30.10.2023 CN 202311424812
(71) Applicant: HUAWEI TECHNOLOGIES CO., LTD., Shenzhen, Guangdong 518129 (CN)
(72) Inventor: LIU, Yufei, Shenzhen, Guangdong 518129 (CN); ZHANG, Junyi, Shenzhen, Guangdong 518129 (CN); WANG, Qiaoling, Shenzhen, Guangdong 518129 (CN)
(74) Representative: Körber, Martin Hans
(86) International application number: PCT/CN2024/124541
(87) International publication number: WO 2025/092402

(57) **Abstract**

This application discloses a data storage method, an apparatus, a device, and a computer-readable storage medium, and belongs to the field of communication technologies. The method includes: receiving first data whose length is a first length; obtaining a first free length of a first data storage region in a first receive unit, where the first free length is a length of free space in the first data storage region; determining, based on the first free length and the first length, a target data storage region for storing the first data, where the target data storage region includes the first data storage region or a second data storage region in a second receive unit, and the second receive unit and the first receive unit are different receive units in a same receive queue; and storing the first data in the target data storage region. In this application, the first data is stored based on the first free length and the first length, so that a waste of free space in a data storage region can be reduced.

## Description

This application claims priority to Chinese Patent Application No. 202311424812.4, filed on October 30, 2023 and entitled "DATA STORAGE METHOD, APPARATUS, DEVICE, AND COMPUTER-READABLE STORAGE MEDIUM", which is incorporated herein by reference in its entirety.

### TECHNICAL FIELD

This application relates to the field of communication technologies, and in particular, to a data storage method, an apparatus, a device, and a computer-readable storage medium.

### BACKGROUND

In a communication system, two nodes communicate and interact with each other by sending and receiving messages. A node on a send side sends a message to a node on a receive side, and the node on the receive side may receive the message by using generated receive units and store data that is in the message, to subsequently perform other processing on the stored data.

### SUMMARY

This application provides a data storage method, an apparatus, a device, and a computer-readable storage medium, to reduce a waste of free space in a data storage region. Technical solutions are as follows.

According to a first aspect, a data storage method is provided. The method includes: receiving first data, where a length of the first data is a first length; obtaining a first free length of a first data storage region in a first receive unit, where the first free length is a length of free space in the first data storage region; determining, based on the first free length and the first length, a target data storage region for storing the first data, where the target data storage region includes the first data storage region or a second data storage region in a second receive unit, and the second receive unit and the first receive unit are different receive units in a same receive queue; and storing the first data in the target data storage region.

In this application, the target data storage region determined based on the first free length and the first length may be a data storage region in which a part of space has been occupied. This can reduce a waste of free space in the data storage region, and improve utilization of the data storage region.

In a possible implementation, the first receive unit further includes a first information storage region, and the first free length is stored in the first information storage region. The first free length is stored in the first information storage region in the first receive unit, so that efficiency of obtaining the first free length can be improved, a time period required for determining the target data storage region can be reduced, and data storage efficiency can be improved.

In a possible implementation, the receiving the first data includes: receiving a first message, where the first message includes the first data and the first length of the first data; and obtaining the first data and the first length from the first message. The first message is received, so that the first data and the first length can be synchronously obtained, thereby improving efficiency of obtaining the first data and the first length.

In a possible implementation, the determining, based on the first free length and the first length, the target data storage region for storing the first data includes: comparing the first free length with the first length to obtain a comparison result, where the comparison result indicates whether the free space in the first data storage region is available for storing the first data; and determining the target data storage region based on the comparison result. Determining, based on the comparison result, whether the free space in the first data storage region is sufficient to store the first data can provide an effective basis for determining the target data storage region.

In a possible implementation, after the determining the target data storage region for storing the first data, the method further includes: obtaining, from an information storage region corresponding to the target data storage region, a start address and an occupied length of the target data storage region, where the occupied length is a length of space in which data has been stored in the target data storage region, and the start address is a 1^{st} address of the target data storage region; and determining a storage start address for the first data based on the start address and the occupied length; and the storing the first data in the target data storage region includes: storing the first data by using, as a start point, a location that is in the target data storage region and that is indicated by the storage start address. A more accurate storage start address can be determined based on the start address and the occupied length, to improve accuracy of storing the first data.

In a possible implementation, after the determining the target data storage region for storing the first data, the method further includes: obtaining, from an information storage region corresponding to the target data storage region, a start address and an occupied length of the target data storage region, where the occupied length is a length of space in which data has been stored in the target data storage region, and the start address is a 1^{st} address of the target data storage region; determining a storage start address for the first data based on the start address and the occupied length; and determining a storage end address for the first data based on the storage start address and the first length; and the storing the first data in the target data storage region includes: storing the first data by using, as a start point, a location that is in the target data storage region and that is indicated by the storage start address and using, as an end point, a location that is in the target data storage region and that is indicated by the storage end address. The storage start address and the storage end address for the first data are determined, so that a storage status of the first data can be more detailed and accurate.

In a possible implementation, when the comparison result is that the first length is less than or equal to the first free length, the target data storage region is the first data storage region, the start address is a start address of the first data storage region, and the occupied length is an occupied length of the first data storage region. If the first length is less than or equal to the first free length, it indicates that the free space in the first data storage region is sufficient to store the first data. In this case, the first data storage region may be determined as the target data storage region, to reduce a waste of the free space in the first data storage region and improve usage of the first data storage region.

In a possible implementation, when the comparison result is that the first length is greater than the first free length, the target data storage region is the second data storage region, the start address is a start address of the second data storage region, and the occupied length is an occupied length of the second data storage region. If the first length is greater than the first free length, and the free space in the first data storage region is insufficient to store the first data, the second data storage region may be determined as the target data storage region. Determining the storage start address for the first data based on the start address of the second data storage region and the occupied length of the second data storage region can ensure that the first data is stored more accurately.

In a possible implementation, after the comparing the first free length with the first length to obtain the comparison result, the method further includes: removing the first receive unit from the receive queue. If the first length is greater than the first free length, the free space in the first data storage region is insufficient to store the first data. In this case, the first receive unit to which the first data storage region belongs may be removed from the receive queue, to reduce a quantity of receive units in the receive queue, thereby improving efficiency of subsequently determining a target data storage region for other data.

In a possible implementation, after the storing the first data in the target data storage region, the method further includes: determining a second free length of the target data storage region, where the second free length is a length of free space after the first data is stored in the target data storage region; and removing, from the receive queue based on the second free length being less than or equal to a free threshold, a receive unit to which the target data storage region belongs. If the length of the free space after the first data is stored in the target data storage region is less than the free threshold, it may be considered that other subsequently received data cannot be stored in the target data storage region. In this case, the receive unit to which the target data storage region belongs is removed from the receive queue, so that the efficiency of subsequently determining a target data storage region for other data can be improved.

In a possible implementation, after the storing the first data in the target data storage region, the method further includes: generating first complete information, where the first complete information indicates that storage of the first data is completed, the first complete information includes at least one of storage start address for the first data, storage end address for the first data, second free length, and removal identifier, the removal identifier indicates whether there is a receive unit removed from the receive queue in the first receive unit or the second receive unit, and the first complete information is used for determining whether to add a third receive unit to the receive queue. The first complete information generated based on the storage status of the first data can be used for determining whether to add the new third receive unit to the receive queue, to ensure that the receive units in the receive queue can meet a storage requirement of subsequently received data.

In a possible implementation, after the generating the first complete information, the method further includes: receiving supplementary information, where the supplementary information is determined based on the first complete information; and adding the third receive unit to the receive queue based on the supplementary information. Adding the new third receive unit to the receive queue based on the received supplementary information can ensure that the receive units in the receive queue can meet the storage requirement of the subsequently received data.

In a possible implementation, the first free length is greater than the free threshold. If the first free length of the first data storage region is less than or equal to the free threshold, it indicates that the first receive unit to which the first data storage region belongs is a receive unit that needs to be removed from the receive queue, and the first data storage region cannot serve as the target data storage region for the first data. In other words, the first free length does not need to be compared with the first length, to avoid a waste of processing resources caused by performing subsequent operations such as invalid comparison. In addition, the method is performed when it is ensured that the first free length of the first data storage region is greater than the free threshold, to perform subsequent determining and storage operations.

According to a second aspect, a data storage apparatus is provided. The apparatus includes: a receiving module, configured to receive first data, where a length of the first data is a first length; an obtaining module, configured to obtain a first free length of a first data storage region in a first receive unit, where the first free length is a length of free space in the first data storage region; a determining module, configured to determine, based on the first free length and the first length, a target data storage region for storing the first data, where the target data storage region includes the first data storage region or a second data storage region in a second receive unit, and the second receive unit and the first receive unit are different receive units in a same receive queue; and a storage module, configured to store the first data in the target data storage region.

In a possible implementation, the first receive unit further includes a first information storage region, and the first free length is stored in the first information storage region.

In a possible implementation, the receiving module is configured to: receive a first message, where the first message includes the first data and the first length of the first data; and obtain the first data and the first length from the first message.

In a possible implementation, the determining module is configured to: compare the first free length with the first length to obtain a comparison result, where the comparison result indicates whether the free space in the first data storage region is available for storing the first data; and determine the target data storage region based on the comparison result.

In a possible implementation, the obtaining module is further configured to obtain, from an information storage region corresponding to the target data storage region, a start address and an occupied length of the target data storage region, where the occupied length is a length of space in which data has been stored in the target data storage region, and the start address is a 1^{st} address of the target data storage region. The determining module is further configured to determine a storage start address for the first data based on the start address and the occupied length. The storage module is configured to store the first data by using, as a start point, a location that is in the target data storage region and that is indicated by the storage start address.

In a possible implementation, the obtaining module is further configured to obtain, from an information storage region corresponding to the target data storage region, a start address and an occupied length of the target data storage region, where the occupied length is a length of space in which data has been stored in the target data storage region, and the start address is a 1^{st} address of the target data storage region. The determining module is further configured to: determine a storage start address for the first data based on the start address and the occupied length; and determine a storage end address for the first data based on the storage start address and the first length. The storage module is configured to store the first data by using, as a start point, a location that is in the target data storage region and that is indicated by the storage start address and using, as an end point, a location that is in the target data storage region and that is indicated by the storage end address.

In a possible implementation, when the comparison result is that the first length is less than or equal to the first free length, the target data storage region is the first data storage region, the start address is a start address of the first data storage region, and the occupied length is an occupied length of the first data storage region.

In a possible implementation, when the comparison result is that the first length is greater than the first free length, the target data storage region is the second data storage region, the start address is a start address of the second data storage region, and the occupied length is an occupied length of the second data storage region.

In a possible implementation, the apparatus further includes a removal module. The removal module is configured to remove the first receive unit from the receive queue.

In a possible implementation, the determining module is further configured to determine a second free length of the target data storage region, where the second free length is a length of free space after the first data is stored in the target data storage region. The removal module is further configured to remove, from the receive queue based on the second free length being less than or equal to a free threshold, a receive unit to which the target data storage region belongs.

In a possible implementation, the apparatus further includes a generation module. The generation module is configured to generate first complete information, where the first complete information indicates that storage of the first data is completed, the first complete information includes at least one of storage start address for the first data, storage end address for the first data, second free length, and removal identifier, the removal identifier indicates whether there is a receive unit removed from the receive queue in the first receive unit or the second receive unit, and the first complete information is used for determining whether to add a third receive unit to the receive queue.

In a possible implementation, the receiving module is further configured to receive supplementary information, where the supplementary information is determined based on the first complete information. The apparatus further includes an adding module. The adding module is configured to add the third receive unit to the receive queue based on the supplementary information.

In a possible implementation, the first free length is greater than the free threshold.

According to a third aspect, a communication apparatus is provided. The apparatus includes a network interface, a storage, and a processor. The network interface, the storage, and the processor communicate with each other through an internal connection path. The storage is configured to store instructions. The processor is configured to execute the instructions stored in the storage, to control the network interface to receive a signal and control the network interface to send a signal. In addition, when the processor executes the instructions stored in the storage, the processor is enabled to perform the method according to the first aspect or any one of the possible implementations of the first aspect.

Optionally, there are one or more processors, and there are one or more storages.

Optionally, the storage and the processor may be integrated together, or the storage and the processor may be separately disposed.

According to a fourth aspect, a data storage system is provided. The data storage system includes a send device and a receive device. The receive device is configured to perform the data storage method according to the first aspect or any one of the possible implementations of the first aspect. The send device is configured to send data to the receive device.

According to a fifth aspect, a data storage device is provided. The device includes a processor. The processor is coupled to a storage. The storage stores at least one instruction, and the at least one instruction is loaded and executed by the processor, to enable the data storage device to implement the data storage method according to the first aspect or any one of the possible implementations of the first aspect.

According to a sixth aspect, a communication system is provided. The system includes the apparatus according to the second aspect or any one of the possible implementations of the second aspect.

According to a seventh aspect, a computer program (product) is provided. The computer program (product) includes computer program code. When the computer program code is run by a computer, the computer is enabled to perform the method according to the first aspect or any one of the possible implementations of the first aspect.

According to an eighth aspect, a computer-readable storage medium is provided. The computer-readable storage medium stores a program or instructions. When the program or the instructions are run on a computer, the method according to the first aspect or any one of the possible implementations of the first aspect is performed.

According to a ninth aspect, a chip is provided, including a processor, and configured to invoke, from a storage, instructions stored in the storage and run the instructions, to enable a computer in which the chip is installed to perform the method according to the first aspect or any one of the possible implementations of the first aspect.

According to a tenth aspect, another chip is provided, including an input interface, an output interface, a processor, and a storage. The input interface, the output interface, the processor, and the storage are connected through an internal connection path. The processor is configured to execute code in the storage. When the code is executed, a computer in which the chip is installed performs the method according to the first aspect or any one of the possible implementations of the first aspect.

It should be understood that, for beneficial effects achieved by the technical solutions of the second aspect to the tenth aspect of this application and the corresponding possible implementations, refer to the technical effects of the first aspect and the corresponding possible implementations of the first aspect. Details are not described herein again.

### BRIEF DESCRIPTION OF DRAWINGS

FIG. 1 is a diagram of a communication process in a communication scenario in an eager protocol mode according to an embodiment of this application;
FIG. 2 is a diagram of a communication process in a communication scenario in a rendezvous protocol mode according to an embodiment of this application;
FIG. 3 is a diagram of a communication process in a related technology according to an embodiment of this application;
FIG. 4 is a diagram of an implementation scenario according to an embodiment of this application;
FIG. 5 is a diagram of an implementation scenario of network adapter-based implementation according to an embodiment of this application;
FIG. 6 is a schematic flowchart of a data storage method according to an embodiment of this application;
FIG. 7 is a diagram of a receive unit of a receiver and memory corresponding to the receive unit according to an embodiment of this application;
FIG. 8 is another diagram of a receive unit of a receiver and memory corresponding to the receive unit according to an embodiment of this application;
FIG. 9 is a diagram of a structure of a receive unit according to an embodiment of this application;
FIG. 10 is a storage diagram of a receiver according to an embodiment of this application;
FIG. 11 is a diagram of storing data in a data storage region in a related technology according to an embodiment of this application;
FIG. 12 is a diagram of storing data in a data storage region in this application according to an embodiment of this application;
FIG. 13 is a diagram of a process of implementing an append-write operation in a related technology according to an embodiment of this application;
FIG. 14 is a diagram of a process of implementing an append-write operation in this application according to an embodiment of this application;
FIG. 15 is a diagram of a structure of a data storage apparatus according to an embodiment of this application; and
FIG. 16 is a diagram of a structure of a data storage device according to an embodiment of this application.

### DESCRIPTION OF EMBODIMENTS

Terms used in implementations of this application are only for explaining specific embodiments of this application, but are not intended to limit this application.

In a communication system, two nodes communicate and interact with each other by sending and receiving messages. For example, a data center network is a communication network in the communication system. In the data center network, two nodes may communicate and interact with each other by sending messages to each other based on a transport layer protocol for a remote direct memory access (remote direct memory access, RDMA) technology. The RDMA is a technology for accessing data in memory by bypassing an operating system kernel of a remote host. In the RDMA technology, during data access, the operating system is bypassed, and a protocol stack is offloaded by network adapter hardware, to implement zero-copy (zero-copy) and kernel-bypass (kernel-bypass) data transmission. In this way, the RDMA technology saves a large quantity of central processing unit (central processing unit, CPU) resources, reduces CPU usage, improves a system throughput, reduces a network communication delay of the system, and can meet a requirement of compute-intensive or storage-intensive application data in the data center network. Therefore, the RDMA technology is widely applied to a massively parallel computer cluster in the data center network.

The transport layer protocol for the RDMA technology may be a protocol based on an InfiniBand (InfiniBand, IB) network, or may be a protocol supporting Ethernet (Ethernet). The transport layer protocol for the RDMA technology may be referred to as an RDMA protocol, and includes but is not limited to an RDMA over converged Ethernet (RDMA over Converged Ethernet, RoCE) protocol, an RDMA over converged Ethernet version 2 (RDMA over Converged Ethernet version 2, RoCEv2) protocol, or an IB protocol. The RDMA includes two communication modes: two-sided communication mode and one-sided communication mode. An operation in the one-sided communication mode may be, for example, a write/read (Write/Read) operation, and an operation in the two-sided communication mode may be, for example, a send-receive (send-receive, Send-Recv) operation.

Regardless of the one-sided communication mode or the two-sided communication mode, in the RoCE, RoCEv2, or IB protocol, a transmission unit exchanged between a sender and a receiver may be a message (message, msg). One message corresponds to one transmission request of an application supported by the sender and the receiver. Each message may have a different length, and a maximum length of the message may be set based on transmission capabilities of the sender and the receiver. For example, the maximum length may be 2 gigabytes (gigabytes, GB). When the length of the message exceeds a length of a path (Path) maximum transmission unit (maximum transmission unit, MTU), the message may be divided into a plurality of packets, and the sender sequentially sends the plurality of packets to the receiver, to implement complete sending of the message.

In the two-sided communication mode, a send-receive (SEND-Recv) two-sided communication primitive is used during message transmission, and both communication parties need to participate, to be specific, both the sender and the receiver need to participate in communication. The two-sided communication mode is widely applied to different RDMA technical scenarios, for example, may be applied to a scenario in a message passing interface (message passing interface, MPI) protocol mode. The MPI protocol mode includes but is not limited to an eager (Eager) protocol mode and a rendezvous (Rendezvous) protocol mode. In the eager protocol mode, when the sender sends a message, it is assumed that the receiver can store data. In the rendezvous protocol mode, the sender starts to send data only after receiving an acknowledgment from the receiver. Regardless of the eager mode or rendezvous mode, when an MPI communication library is used, the SEND-Recv two-sided communication primitive is frequently used in a communication process, to perform the SEND-Recv operation.

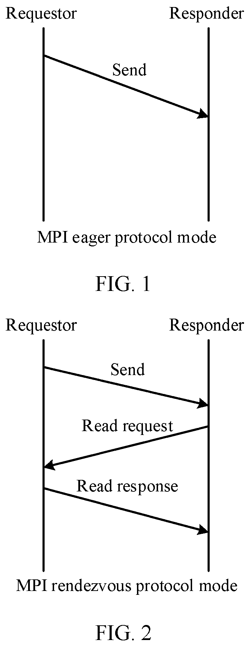

For example, FIG. 1 is a diagram of a communication process in a communication scenario in an eager protocol mode. In an MPI eager protocol mode, a requestor (requestor) sends a message to a responder (responder), so that both the requestor and the responder participate in the communication process, to implement two-sided communication between the requestor and the responder. The requestor is a sender, and the responder is a receiver.

FIG. 2 is a diagram of a communication process in a communication scenario in a rendezvous protocol mode. In an MPI rendezvous protocol mode, after a requestor sends a message to a responder, the responder sends a read request (read request) to the requestor based on the message, and the requestor returns a read response (read response) to the responder based on the read request, to implement two-sided communication between the requestor and the responder.

In a possible implementation, in an RDMA-based SEND-Recv two-sided communication scenario, before the sender communicates with the receiver, to be specific, before the sender sends a message to the receiver, the sender and the receiver each may establish a work queue (work queue, WQ), and a receive action of the receiver needs to be performed before a send (SEND) action of the sender. In this case, the sender can send data to the receiver. The work queue established by the sender is a send queue (send queue, SQ), and the work queue established by the receiver is a receive queue (receive queue, RQ). The receive queue and the send queue may be referred to as a queue pair (queue pair, QP). Different queue pairs are distinguished based on different queue pair numbers (queue pair number, QPN). The send queue may include a plurality of send queue elements (send queue element, SQE), and the send queue element may also be referred to as a send unit. The receive queue may include a plurality of receive queue elements (receive queue element, RQE), and the receive queue element may also be referred to as a receive unit.

A process of establishing the RQE is used as an example. The receiver may deliver a plurality of RQEs to the RQ or place a plurality of RQEs in the RQ through ibv_post_recv (an interface for placing a work request in the receive queue). The receiver may register memory corresponding to each RQE, and a memory region (memory region, MR) after registration is for storing to-be-received data and information corresponding to the RQE. A memory region for storing data may be referred to as a data storage region, and the data storage region may be in a buffer (buffer) of the receiver. A memory region for storing the information corresponding to the RQE may be referred to as an information storage region, and the information storage region may be in the buffer or another memory region of the receiver.

After both the sender and the receiver establish the work queues, the sender may send a message to the receiver. Each message carries data, and the data may be in a data packet in the message. The sender may send the message by sending a packet to the receiver. The packet includes a basic transport header (base transport header, BTH) and a direct memory access (direct memory access, DMA) payload (payload). The DMA payload is for carrying data, and the basic transport header carries a packet sequence number (packet sequence number, PSN) of the data packet. Different connections are established between the sender and different receivers. A quantity of sent data packets may be separately calculated for different connections, and a packet sequence number is allocated to each data packet. For each connection, after sending of a data packet is completed, the packet sequence number is increased by one. If a fault occurs during sending of the data packet, and the data packet needs to be resent, a packet sequence number of the resent data packet is the same as that of the data packet sent for the first time.

In one or more communication processes, the sender may send data with different lengths. Therefore, each RQE delivered by the receiver may use a maximum length of data sent by the sender as a length of the data storage region in the memory region of the RQE, to avoid a data storage failure caused by data overflow that is caused because the length of the data is greater than a length of receive memory in the data storage region.

In a receive mechanism for the receiver in a related technology, regardless of whether a length of data in an SQE sent by the sender is the maximum length, RQEs delivered by the receiver are in one-to-one correspondence with SQEs sent by the sender. Each time the receiver receives an SQE sent by the sender, the receiver receives the SQE by using an unused RQE and stores data in the SQE, to consume the RQEs in a one-to-one ratio with the SQEs.

In the related technology, on the receiver, the RQEs in the receive queue are consumed at a high speed, and a large quantity of RQEs are needed. In this case, RQEs need to be continuously supplemented to the receive queue, to receive a large quantity of SQEs. Consequently, a large quantity of CPU resources of the receiver are consumed. In addition, if the length of the data sent by the sender is less than the maximum length of the data, remaining memory in the RQE in which the data is stored is not used, resulting in a waste of memory resources.

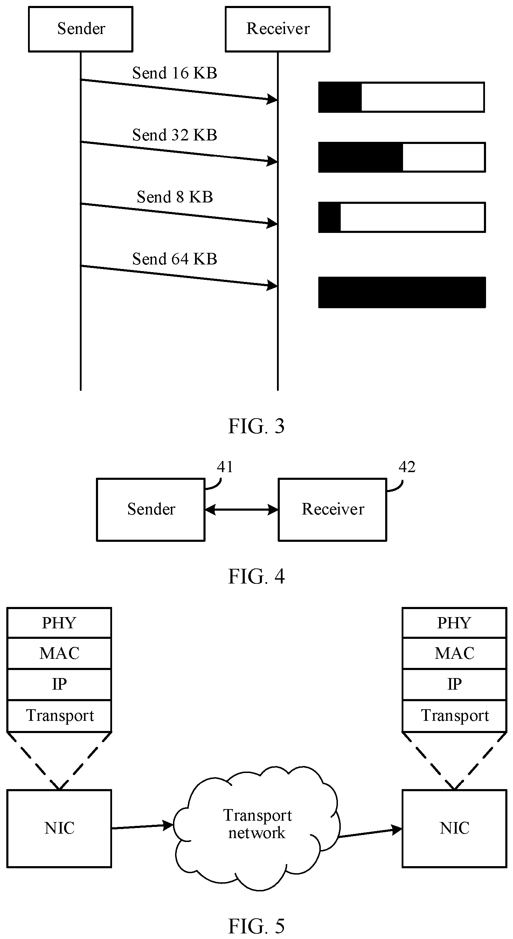

FIG. 3 is a diagram of a communication process in a related technology. A maximum length of data that can be sent by a sender is 64 kilobytes (kilobyte, KB), and a length of a data storage region in each RQE delivered by a receiver may be 64 KB. Lengths of data in a plurality of SQEs sent by the sender to the receiver are respectively 16 KB, 32 KB, 8 KB, and 64 KB. RQEs delivered by the receiver are consumed in a one-to-one ratio with the SQEs. When the length of the data is less than 64 KB, in the RQE, a part (represented by a black rectangle) of memory space for storing data is used and the other part (represented by a white rectangle) remains. The remaining memory space cannot store data, resulting in a waste of memory.

Embodiments of this application provide a data storage method, to reduce the waste of memory. The method can be applied to but is not limited to a communication scenario based on an RDMA technology. For example, FIG. 4 is a diagram of an implementation scenario. The implementation scenario includes a sender 41 and a receiver 42. A communication connection between the sender 41 and the receiver 42 is implemented in a wired or wireless manner. The sender 41 and the receiver 42 may be deployed on a same device, or may be deployed on different devices. The sender 41 may interact with one or more receivers 42, and the receiver 42 may interact with one or more senders 41. The sender 41 may send a message to the receiver 42, and the receiver 42 may receive the message sent by the sender 41 and store data that is in the message.

In a possible implementation, the sender 41 and the receiver 42 may be communication nodes or computer devices. For example, the sender 41 and the receiver 42 may be communication nodes or computer devices on which network interface cards (network interface card, NIC) are deployed, for example, servers on which network interface cards are deployed. The network interface card may also be referred to as a network adapter. The network adapter may be a host channel adapter (host channel adapter, HCA), namely, an RDMA network interface card (RDMA network interface card, RNIC) that supports RDMA transmission. Optionally, the network adapter may be a network adapter having a function of offloading a transport layer protocol stack to hardware. The network adapter having the function of offloading the transport layer protocol stack to hardware can offload a data processing function of the transport layer protocol stack to the network adapter, in other words, the data processing function of the transport layer protocol stack is no longer executed by software, but is executed by the network adapter, namely, hardware.

FIG. 5 is a diagram of an implementation scenario of network adapter-based implementation. Two communication nodes on which NICs are deployed are respectively a sender and a receiver. The sender and the receiver are connected via a transport network, to implement communication. The transport network may include one or more communication devices that can implement a forwarding function. The communication device may be, for example, a switch (switch) or a top-of-rack (top-of-rack, ToR) switch.

Both the two NICs may be NICs having a function of offloading a transport layer protocol stack to hardware. A transport layer protocol stack targeted by the NIC includes a physical (physical, PHY) layer, a media access control (media access control, MAC) layer, an internet protocol (internet protocol, IP) layer, and a transport (Transport) layer.

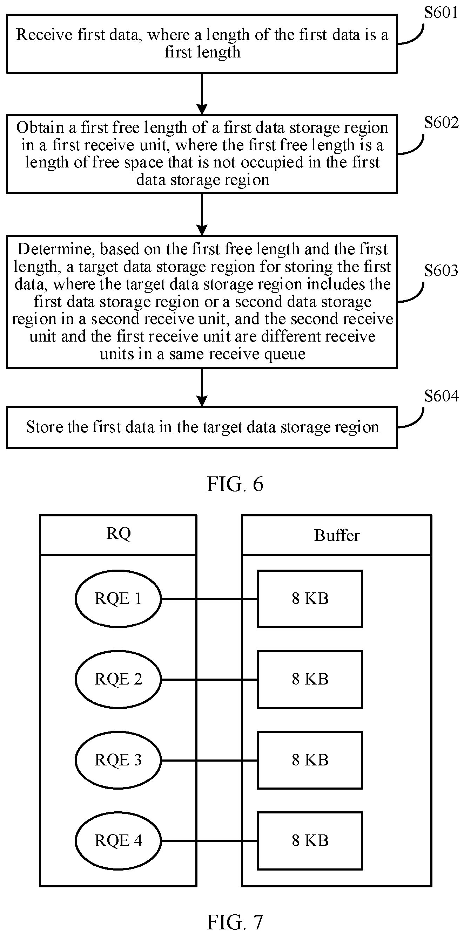

The data storage method provided in embodiments of this application can be applied to the receiver in the implementation scenario shown in FIG. 4 or FIG. 5. FIG. 6 is a schematic flowchart of a data storage method. The method includes but is not limited to the following S601 to S604.

S601: Receive first data, where a length of the first data is a first length.

The first data is data to be stored by a receiver, and may be sent by a sender to the receiver. For example, in an RDMA communication scenario, when an RQE of the receiver is ready, the sender may send, to the receiver, a message carrying to-be-stored data. For example, an RDMA program for the sender delivers an SQE by invoking an ibv_post_send interface (an interface for delivering SQEs), and the SQE is processed by a network adapter of the sender and then transmitted to the receiver. The receiver receives the message sent by the sender, to receive the first data.

A manner of determining the length of the first data is not limited in this embodiment of this application. Optionally, the sender may include the first length of the first data in a first message carrying the first data, so that the receiver can obtain the first data and the first length of the first data from the first message after receiving the first message. In a process of obtaining the first data and the first length from the first message, the first data and the first length may be synchronously obtained, to improve efficiency of obtaining the first data and the first length. Alternatively, the first data and the first length may be separately obtained at different moments. This is not limited in this application.

In another manner of obtaining the first length, after obtaining the first data, the receiver may alternatively autonomously calculate the length of the first data, to obtain the first length. Because a loss may occur in a process of transmitting the first data from the sender to the receiver, autonomously calculating the first length of the first data can ensure accuracy of the obtained first data.

S602: Obtain a first free length of a first data storage region in a first receive unit, where the first free length is a length of free space in the first data storage region.

In a possible implementation, after the sender and the receiver complete link establishment, the receiver may register, in advance, memory for storing data, and deliver, to an RQ through an ibv_post_recv interface, an RQE bound to the memory. For example, FIG. 7 is a diagram of a receive unit of a receiver and memory corresponding to the receive unit. If a maximum length of data that can be sent by the sender is 8 KB, to be specific, a maximum length of data carried in a message in two-sided communication is 8 KB, a user program may push an RQE whose length is 8 KB to the RQ through the ibv_post_recv interface.

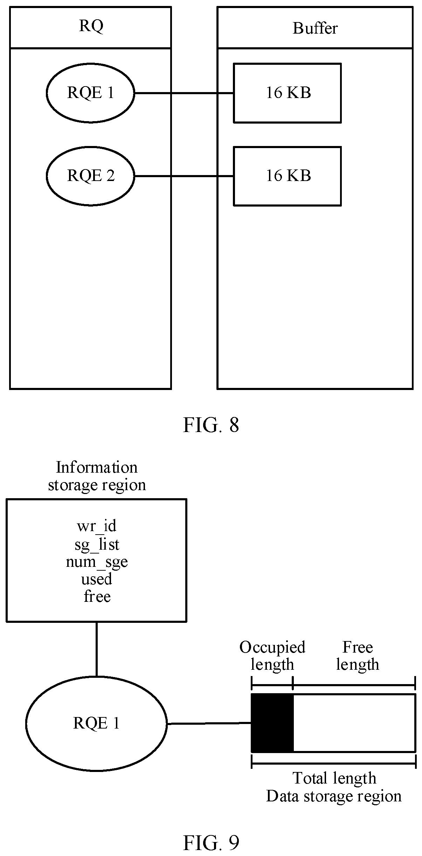

FIG. 8 is another diagram of a receive unit of a receiver and memory corresponding to the receive unit. A method for delivering an RQE to a receive queue in FIG. 8 is the same as that in FIG. 7. A user program may also push the RQE to the RQ through an ibv_post_recv interface, and a related interface function remains unchanged. However, a length of memory bound to the delivered RQE may be greater than a maximum length of data in a message during communication. The receiver can continuously receive data by delivering a larger RQE. For example, if the maximum length is still 8 KB, the length of the memory bound to the RQE may be greater than 8 KB, for example, may be 16 KB.

In a possible implementation, each receive unit in the receive queue may include a data storage region and an information storage region. The data storage region is for storing received data, and the information storage region is for storing information corresponding to the receive unit. The information storage region may include different information fields, and different information fields are for storing different types of information. Correspondingly, in addition to the first data storage region, the first receive unit may further include a first information storage region, and the first free length may be stored in the first information storage region.

For example, FIG. 9 is a diagram of a structure of a receive unit. For example, the receive unit is an RQE 1. The receive unit includes two regions: a data storage region and an information storage region. The data storage region and the information storage region are two storage regions that are independent of each other. The data storage region may be in a buffer, and is for storing data. The information storage region and the data storage region may be at different memory locations. The information storage region can store various types of information of the receive unit, for example, a work request identifier (work request identity document, wr_id), a scatter/gather list (scatter/gather list, sg_list), a number of scatter/gather elements (number-scatter/gather element, num_sge), an occupied length of used (used) space, and a free length of free (free) space. Different information is stored in different information fields in the information storage region. For example, the occupied length may be stored in a used field, and the free length may be stored in a free field. In a possible implementation, the first free length of the first data storage region in the first receive unit may be stored in a free field in the first information storage region in the first receive unit.

wr is delivered by a user, and is converted, through driving, into a work queue on the receiver. Each wr has a corresponding wr_id, and the wr_id is for distinguishing between different wrs. sg_list is an array. One sg_list includes one or more sges, and one sge is one data segment (data segment). A quantity of sges is indicated by the num_sge, and the sg_list may further indicate a start address of the data storage region in the receive unit.

The used space may also be referred to as space that has been occupied or occupied space (for example, memory space represented by a black rectangle in FIG. 9), and is memory space in which other data has been stored in the data storage region. The occupied length is a length of space in which data has been stored in the data storage region, namely, a size of the used space in the data storage region. The free space (for example, memory space represented by a white rectangle in FIG. 9) is memory space in which no data or information is stored in the data storage region and that is in a free state, namely, memory space that is not occupied by any data or information. The free length is a size of memory in which no data is stored in the data storage region, namely, a length of the free space in the data storage region. A sum of an occupied length and a free length of any data storage region is a total length of the data storage region. In this embodiment of this application, the used field and the free field are added to the information storage region in the receive unit, to identify memory usage of the data storage region in the receive unit.

The first receive unit is not limited in this embodiment of this application. Optionally, the first receive unit may be a 1^{st} or last receive unit in the receive queue, or may be a receive unit with smallest free space in receive units in the receive queue. In a possible implementation, before the first data is received, other data may have been stored in the first data storage region in the first receive unit, and the memory space in the first data storage region is partially occupied. Therefore, the first data storage region has the occupied space and the free space, and the length of the free space in the first data storage region is the first free length.

Optionally, a receive unit removal mechanism may be set in embodiments of this application. For example, a free threshold may be set, and whether each receive unit needs to be removed from the receive queue is determined based on a comparison between the free length of the data storage region in each receive unit and the free threshold. If a free length of a data storage region in any receive unit is less than or equal to the free threshold, the receive unit may be removed from the receive queue. A value of the free threshold may be set based on experience or a user requirement, and the free threshold may be, for example, 4 KB or 0.

With the receive unit removal mechanism, if the first free length is less than or equal to the free threshold, other subsequently received data cannot be stored in the first data storage region in the first receive unit. As a result, the first receive unit is removed from the receive queue. Therefore, the first free length needs to be greater than the free threshold. If the first free length of the first data storage region is less than or equal to the free threshold, it indicates that the first receive unit to which the first data storage region belongs is a receive unit that needs to be removed from the receive queue, and the first data storage region cannot serve as a target data storage region for the first data. In other words, the first free length does not need to be compared with the first length, to avoid a waste of processing resources caused by performing subsequent operations such as invalid comparison. When it is ensured that the first free length of the first data storage region is greater than the free threshold, the first free length is compared with the first length, to perform subsequent determining and storage operations.

In a possible implementation, even if there is the receive unit removal mechanism and the first free length is less than or equal to the free threshold, the receiver may have received the first data before the first receive unit is removed from the receive queue. In this case, the first free length of the first receive unit may be less than or equal to the free threshold.

S603: Determine, based on the first free length and the first length, the target data storage region for storing the first data, where the target data storage region includes the first data storage region or a second data storage region in a second receive unit, and the second receive unit and the first receive unit are different receive units in a same receive queue.

A method for determining the target data storage region based on the first free length and the first length is not limited in this embodiment of this application. For example, the first free length may be compared with the first length to obtain a comparison result, and the target data storage region is determined based on the comparison result. The comparison result may indicate whether the free space in the first data storage region is available for storing the first data. Determining, based on the comparison result, whether the free space in the first data storage region is sufficient to store the first data can provide an effective basis for determining the target data storage region.

For example, if the comparison result is that the first length is less than or equal to the first free length, the comparison result indicates that the free space in the first data storage region is available for storing the first data. In this case, the first data storage region may be determined as the target data storage region, to reduce a waste of the free space in the first data storage region and improve usage of the first data storage region.

If the comparison result is that the first length is greater than the first free length, the comparison result indicates that the free space in the first data storage region is unavailable for storing the first data. In this case, the second receive unit may be determined from the receive queue to which the first receive unit belongs, and the second data storage region in the second receive unit is determined as the target data storage region.

Optionally, if the first receive unit is the 1^{st} receive unit in the receive queue, and the receive units in the receive queue are consumed in an arrangement sequence, a 2^{nd} receive unit in the receive queue may be determined as the second receive unit. If the first receive unit is the last receive unit in the receive queue, and the receive units in the receive queue are consumed in a reverse sequence of the arrangement sequence, a last but one receive unit in the receive queue may be determined as the second receive unit.

If the first receive unit is a receive unit with a smallest free length in the receive queue, the free length of the data storage region in each receive unit in the receive queue may be obtained to determine one or more data storage regions whose free lengths are greater than or equal to the first length. When there is one determined data storage region whose free length is greater than or equal to the first length, a receive unit to which the data storage region belongs may be determined as the second receive unit. When there are a plurality of determined data storage regions whose free lengths are greater than or equal to the first length, a receive unit with a smallest free length in a plurality of receive units may be determined as the second receive unit. Regardless of a manner in which the second receive unit is determined, the second data storage region in the second receive unit may be determined as the target data storage region.

In a possible implementation, after the target data storage region is determined, a location at which the first data starts to be stored in the target data storage region and an address corresponding to the location may be further determined. A more accurate storage start address for the first data can be determined based on a start address of the target data storage region and an occupied length of the target data storage region, to improve accuracy of storing the first data. A start address of any data storage region may be a 1^{st} address of the data storage region.

For example, the start address and the occupied length of the target data storage region may be obtained from an information storage region corresponding to the target data storage region, and the storage start address for the first data is determined based on the start address and the occupied length.

A determined target data storage region varies with a comparison result, leading to a different determined storage start address. The following uses Case 1 and Case 2 as examples to describe a process of determining the storage start address.

Case 1: When the comparison result is that the first length is less than or equal to the first free length, the target data storage region is the first data storage region, the start address is a start address of the first data storage region, and the occupied length for calculating the storage start address for the first data is an occupied length of the first data storage region. In this case, the start address of the first data storage region and the occupied length of the first data storage region may be obtained from the first information storage region. For example, it can be learned from the foregoing descriptions of FIG. 9 that the start address of the first data storage region may be obtained from an sg_list field in the first information storage region, and the occupied length of the first data storage region may be obtained from a used field in the first information storage region.

After the occupied length and the start address of the first data storage region are obtained, a sum of the start address of the first data storage region and the occupied length of the first data storage region may be calculated, and the sum may be determined as the storage start address. For example, the start address (address, addr) of the first data storage region is 0xffff0100, the occupied length of the first data storage region is 0xffff0100, and the sum of the occupied length and the start address is 0xffff0200. In this case, 0xffff0200 may be used as the storage start address for the first data.

In a possible implementation, the start address of the first data storage region may be further used as a reference address, the occupied length of the first data storage region is used as an offset. An offset address is determined based on the reference address and the offset, and the determined offset address is the storage start address for the first data.

Case 2: When the comparison result is that the first length is greater than the first free length, the target data storage region is the second data storage region, the start address is a start address of the second data storage region, and the occupied length for calculating the storage start address is an occupied length of the second data storage region. In this case, a method for determining the storage start address is the same as that in the case in which the comparison result is that the first length is less than or equal to the first free length. Details are not described herein again. Optionally, if no data is stored in the second data storage region, the occupied length of the second data storage region may be 0.

In a possible implementation, the first length being greater than the first free length indicates that the first data storage region is unavailable for storing the first data. In this case, the first receive unit may be removed from the receive queue, to reduce a quantity of receive units in the receive queue, thereby improving efficiency of subsequently determining a target data storage region for other data.

Regardless of whether the comparison result corresponds to Case 1 or Case 2 of determining the storage start address, after the storage start address is determined, a storage end address for the first data may be determined based on the storage start address and the first length. Then, the first data may be stored by using, as a start point, a location that is in the target data storage region and that is indicated by the storage start address and using, as an end point, a location that is in the target data storage region and that is indicated by the storage end address.

For example, if the storage start address for the first data is 0xffff0200, and the first length is 0xffff0100, the storage end address may be a sum of the storage start address and the first length, that is, 0xffff0300. Optionally, the action of determining the storage end address may be performed before the first data is stored, or may be performed after the first data is stored. This is not limited in this embodiment of this application.

The storage end address and the storage start address may indicate space for storing the first data in the target data storage region, so that a storage status of the first data can be more detailed and accurate.

S604: Store the first data in the target data storage region.

After the storage start address is determined, the first data may be stored in the target data storage region based on the storage start address. For example, the first data may be stored by using, as a start point, a location that is in the target data storage region and that is indicated by the determined storage start address, to implement storage of the first data.

In a possible implementation, after the storage of the first data is completed, whether a receive unit for storing the first data needs to be removed from the receive queue after storing the first data may be further determined based on the receive unit removal mechanism. For example, a second free length of the target data storage region may be determined, and a receive unit to which the target data storage region belongs is removed from the receive queue based on the second free length being less than or equal to the free threshold. The second free length is a length of free space after the first data is stored in the target data storage region.

A method for determining the second free length is not limited in this embodiment of this application. For example, a difference between a free length of the data storage region for storing the first data before the first data is stored and the first length of the first data may be determined as the second free length. For example, if the data storage region in which the first data is stored is the first data storage region, a difference between the first free length and the first length may be determined as the second free length. If the data storage region in which the first data is stored is the second data storage region, a difference between a free length of the second data storage region before the first data is stored and the first length may be determined as the second free length.

If the second free length is less than or equal to the free threshold, it may be considered that a next piece of received data cannot be stored in the target data storage region. In this case, the receive unit to which the target data storage region belongs may be removed from the receive queue, to reduce a quantity of unavailable receive units in the receive queue, thereby improving efficiency of determining a target data storage region for subsequently received data.

In a possible implementation, after the first data is stored in the target data storage region, first complete information may be further generated. The first complete information indicates that storage of the first data is completed. The first complete information may be stored in a complete queue element (complete queue element, CQE) or a complete unit. After the first complete information is generated, the first complete information may be added to a complete queue.

Optionally, the first complete information includes at least one of storage start address for the first data, storage end address for the first data, second free length, and removal identifier. Different information in the first complete information may be stored in different information fields in the CQE. For example, the storage start address for the first data may be stored in an Addr field, the second free length may be stored in a Free field, and the removal identifier may be stored in an is_pop field.

The removal identifier in the first complete information indicates whether there is a receive unit removed from the receive queue in the first receive unit or the second receive unit. If the first free length of the first data storage region is less than the first length of the first data but is greater than the free threshold, that is, the first data storage region is unavailable for storing the first data, the first receive unit may be determined as a receive unit that needs to be removed. Regardless of whether an operation of removing the first receive unit from the receive queue is completed when the storage of the first data is completed, the removal identifier may indicate that there is a receive unit removed from the receive queue.

If the first free length is less than both the first length and the free threshold, it indicates that, after storage of a previous piece of data is completed, the first receive unit has been determined as a receive unit that needs to be removed from the receive queue. In other words, determining that the first receive unit needs to be removed from the receive queue is not performed in a process of storing the first data. In this case, although the first receive unit is removed in the process of storing the first data, the case in which the first receive unit needs to be removed is determined based on a storage status corresponding to the previous piece of data, instead of being determined based on the storage status of the first data. Therefore, in the process of storing the first data, if the receive unit to which the target data storage region belongs is not determined as a receive unit that needs to be removed, the removal identifier in the first complete information may still indicate that, in the process of storing the first data, there is no receive unit that needs to be removed.

Regardless of whether the target data storage region is the first data storage region or the second data storage region, if the second free length of the target data storage region is less than or equal to the free threshold, it indicates that a receive unit that needs to be removed from the receive queue is determined in the process of storing the first data. Therefore, the removal identifier in the first complete information corresponding to the first data may indicate that there is a receive unit removed from the receive queue.

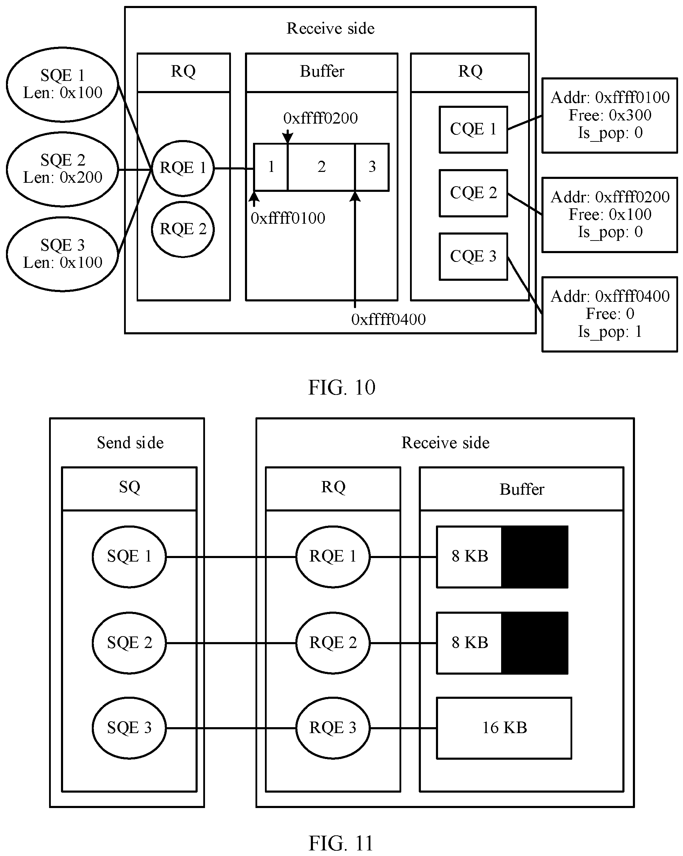

For example, FIG. 10 is a storage diagram of a receiver. An RQ includes an RQE 1 and an RQE 2, and a free threshold is 0. A length of a data storage region in the RQE 1 is 0x400, and the data storage region in the RQE 1 correspondingly stores data in an SQE 1, an SQE 2, and an SQE 3. A length (length, Len) of the data in the SQE 1 is 0x100, and a storage start address in a buffer is 0xffff0100. Before the data in the SQE 1 is stored, no data has been stored in the data storage region in the RQE 1, and the data in the SQE 1 is a 1^{st} piece of data stored in the data storage region in the RQE 1. Therefore, the storage start address for the data in the SQE 1 is the same as a start address of the data storage region in the RQE 1. After the data in the SQE 1 is stored, a length of remaining free space in the data storage region in the RQE 1 changes to 0x300, and the length of the free space is greater than the free threshold. In this case, the RQE 1 does not need to be removed from the receive queue. After the storage of the data in the SQE 1 is completed, a CQE 1 corresponding to the SQE 1 is generated. The CQE 1 includes storage start address Addr for the data in the SQE 1: 0xffff0100, free length free: 0x300, and removal identifier Is_pop: 0, indicating that no receive unit is removed.

A length of the data in the SQE 2 is 0x200, and a storage start address in the buffer is 0xffff0200. The storage start address for the data in the SQE 2 is a sum of the start address 0xffff0100 of the data storage region in the RQE 1 and the length 0x100 of the data in the SQE 1. After the data in the SQE 2 is stored, the length of the remaining free space in the data storage region in the RQE 1 changes to 0x100, and the length of the free space is greater than the free threshold. In this case, the RQE 1 does not need to be removed from the receive queue. After the storage of the data in the SQE 2 is completed, a CQE 2 corresponding to the SQE 2 is generated. The CQE 2 includes storage start address Addr for the data in the SQE 2: 0xffff0200, free length free: 0x100, and removal identifier Is_pop: 0, indicating that no receive unit is removed.

A length of the data in the SQE 3 is 0x100, and a storage start address in the buffer is 0xffff0400. The storage start address for the data in the SQE 2 is a sum of the start address 0xffff0100 of the data storage region in the RQE 1 and an occupied length 0x300 of the data storage region in the SQE 1. After the data in the SQE 3 is stored, the length of the remaining free space in the data storage region in the RQE 1 changes to 0, and the length of the free space is equal to the free threshold. In this case, the RQE 1 may be removed from the receive queue. After the storage of the data in the SQE 3 is completed, a CQE 3 corresponding to the SQE 3 is generated. The CQE 3 includes storage start address Addr for the data in the SQE 3: 0xffff0400, free length free: 0, and removal identifier Is_pop: 1, indicating that the RQE 1 needs to be removed from the receive queue after the storage of the data in the SQE 3 is completed.

In a possible implementation, each piece of complete information may be used by a user to determine consumption of the receive unit in the receive queue based on a removal identifier in each piece of complete information, to determine whether to add a third receive unit to the receive queue, thereby ensuring that the receive unit in the receive queue can meet a storage requirement of subsequently received data. The third receive unit may be a new unused receive unit, in other words, no data has been stored in a data storage region in the third receive unit.

For example, a quantity of receive units removed from the receive queue may be determined based on each piece of complete information. If the quantity of receive units removed from the receive queue is greater than or equal to a removal threshold, supplementary information may be sent to the receiver. The supplementary information can indicate the receiver to add the third receive unit to the receive queue. The supplementary information may be generated based on first complete information, or may be generated based on a plurality of pieces of complete information including the first complete information. The removal threshold indicates a largest quantity of receive units that can be removed from the receive queue. The removal threshold may be set based on experience or a user requirement, for example, 3 or 5.

Then, the receiver may receive the supplementary information, and add the third receive unit to the receive queue based on the supplementary information, to ensure that the receive unit in the receive queue is sufficient to store subsequently received data. Optionally, the supplementary information may include a quantity of third receive units, and the receiver may add the third receive unit based on the quantity. The quantity of added third receive units is not limited in this embodiment of this application. The quantity of third receive units may be the same as the quantity of receive units removed from the receive queue, or may be autonomously set by the user.

The following further describes effect of the data storage method provided in embodiments of this application through comparison with a related technology.

FIG. 11 is a diagram of storing data in a data storage region in a related technology. An SQ on a send side includes an SQE 1, an SQE 2, and an SQE 3, and an RQ on a receive side includes an RQE 1, an RQE 2, and an RQE 3. The SQEs are in one-to-one correspondence with the RQEs. A length of a data storage region in each RQE is 16 KB. A length of data in the SQE 1 is 8 KB. 8 KB memory in a data storage region in the RQE 1 is for storing the data in the SQE 1, and remaining 8 KB memory in the data storage region in the RQE 1 is free space (represented by a black rectangle). A length of data in the SQE 2 is 8 KB. 8 KB memory in a data storage region in the RQE 2 is for storing the data in the SQE 2, and remaining 8 KB memory in the data storage region in the RQE 2 is free space. A length of data in the SQE 3 is 16 KB. 16 KB memory in a data storage region in the RQE 3 is for storing the data in the SQE 3, and remaining memory in the data storage region in the RQE 3 is 0. The free space in the RQE 1 and the free space in the RQE 2 cannot be used, resulting in a waste of memory.

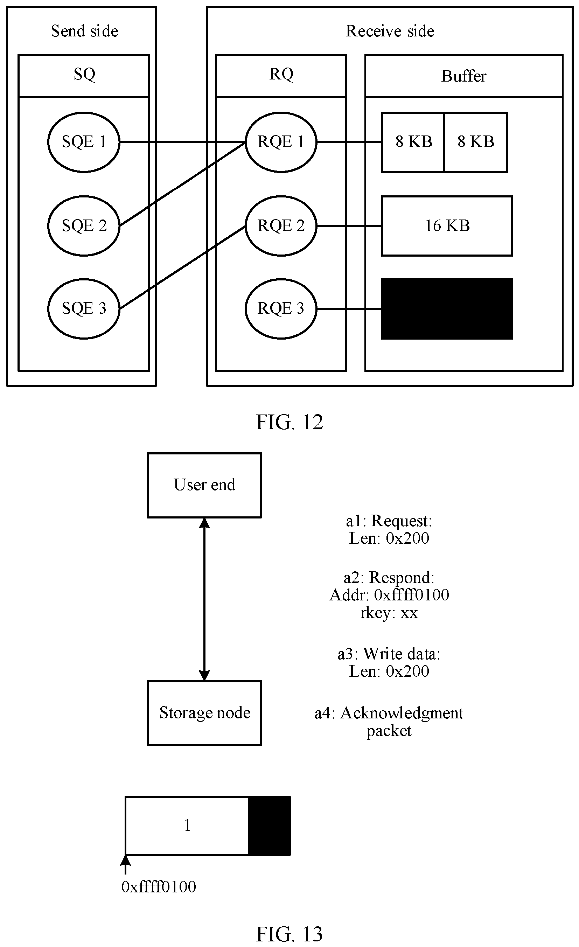

However, in a same scenario, according to the data storage method provided in embodiments of this application, the waste of memory can be reduced. For example, FIG. 12 is a diagram of storing data in a data storage region in this application. An SQ on a send side includes an SQE 1, an SQE 2, and an SQE 3, and an RQ on a receive side includes an RQE 1, an RQE 2, and an RQE 3. A length of a data storage region in each RQE is 16 KB. A length of data in the SQE 1 and a length of data in the SQE 2 are both 8 KB. 8 KB memory in a data storage region in the RQE 1 is for storing the data in the SQE 1, the other 8 KB memory is for storing the data in the SQE 2, and remaining memory in the data storage region in the RQE 1 is 0. A length of data in the SQE 3 is 16 KB. 16 KB memory in a data storage region in the RQE 2 is for storing the data in the SQE 3, and remaining memory in the data storage region in the RQE 2 is 0. The memory space in the RQE 1 and the memory space in the RQE 2 are both used, and no memory is wasted. In addition, 16 KB memory (represented by a black rectangle) in a data storage region in the RQE 3 is not occupied, and is available for storing subsequently received data.

In addition, for an append (Append)-write operation, an implementation method in embodiments of this application is also different from that in the related technology. FIG. 13 is a diagram of a process of implementing an append-write operation in a related technology. The process of implementing the append-write operation in the related technology may be divided into four steps: step a1 to step a4. Step a1: A user end sends a request (request) to a storage node (storage node) through a SEND interface, to notify a length (length) of data 1 to be written into the storage node, and waits. The user end may also be referred to as a client (client), the storage node may also be referred to as a server or a service device, and the length of the data 1 may be, for example, 0x200 shown in FIG. 13. Step a2: The storage node returns, to the user end through the SEND interface, a determined virtual address (virtual address, VA) for memory write and a remote key (remote key, rkey) corresponding to the virtual address. The virtual address may be, for example, Addr: 0xffff0100 shown in FIG. 13. rkey may be a check code corresponding to the virtual address, for checking accuracy of the virtual address. For example, rkey may be xx. Step a3: The user end writes, by using a WRITE operation, the data 1 into a memory location indicated by the virtual address. A length of the data 1 written into the memory is the same as the length of the data 1 sent by the user end. Step a4: After completing the storage of the data 1, the storage node returns an acknowledgment (acknowledgement, ACK) packet to the user end, to indicate that the append-write operation is completed. Time T1 for completing the task of the append-write operation in the related technology is: 2*SEND time period+data transmission (write) time period+ACK time period.

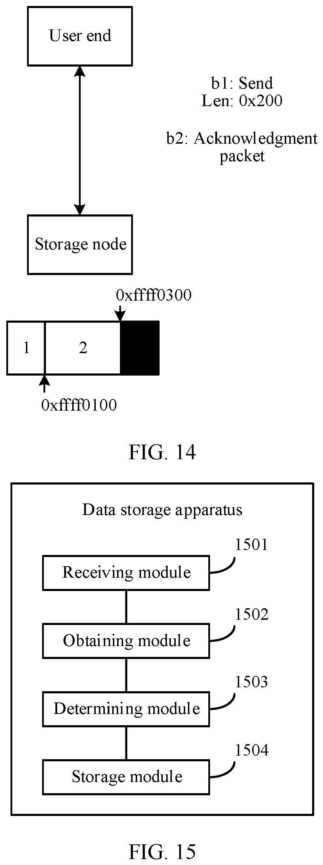

FIG. 14 is a diagram of a process of implementing an append-write operation in this application. The process of implementing the append-write operation according to this application may include two steps: step b1 and step b2. Step b1: A user end may send data 2 for append writing and a length of the data 2 to a storage node through SEND. The length of the data 2 may be, for example, 0x200. Because the storage node delivers, in advance, a data storage region that is in an RQE and that has large memory, the user end does not need to send the length of the data 2 to the storage node and then wait for a reply from the storage node. Step b2: The storage node queries values in a used field and a free field in an information storage region in the RQE, determines a storage start address, and writes the data into the storage start address, to complete an append-write task. For example, the data 2 may be written into a tail part of an address to which the data 1 is previously written. After completing the append-write task, the storage node sends an acknowledgment packet to the user end. In this embodiment of this application, the process of implementing the append-write operation is the same as a process of implementing a data write operation. Time T2 for completing the append-write task is: data transmission time period+ACK time period. In comparison with the related technology, one SEND time period is reduced. It can be learned from comparison with T1 that the time period for completing the append-write operation is reduced.

In conclusion, according to the data storage method provided in this application, memory usage of a data storage region in a receive unit can be improved, and a waste of overall memory of the data storage region can be reduced, thereby reducing memory overheads. In addition, the data storage method provided in this application corresponds to a new consumption mode for the receive unit. One data storage region may be for storing data in a plurality of one or more send units, and the receive unit is not consumed in a one-to-one ratio with the send unit. A quantity of send units that can be received by the receive units is increased, so that a quantity of times of supplementing the receive unit on the receiver can be reduced, thereby reducing pressure on a CPU on the receiver.

In addition, in this application, an information field is added to an information storage region in the receive unit, to record memory usage of the data storage region in the receive unit. A free length and an occupied length of the data storage region are obtained from the information storage region, so that efficiency of determining a target data storage region and performing storage can be improved, and data can be stored more accurately.

The foregoing describes the data storage method provided in embodiments of this application. Corresponding to the method, embodiments of this application further provide a data storage apparatus. The apparatus is used in the receiver in FIG. 4 or FIG. 5. The apparatus is configured to perform the data storage method in FIG. 6 by using modules shown in FIG. 15. As shown in FIG. 15, the data storage apparatus provided in embodiments of this application includes the following modules:
a receiving module 1501, configured to receive first data, where a length of the first data is a first length; an obtaining module 1502, configured to obtain a first free length of a first data storage region in a first receive unit, where the first free length is a length of free space in the first data storage region; a determining module 1503, configured to determine, based on the first free length and the first length, a target data storage region for storing the first data, where the target data storage region includes the first data storage region or a second data storage region in a second receive unit, and the second receive unit and the first receive unit are different receive units in a same receive queue; and a storage module 1504, configured to store the first data in the target data storage region.

In a possible implementation, the first receive unit further includes a first information storage region, and the first free length is stored in the first information storage region.

In a possible implementation, the receiving module 1501 is configured to: receive a first message, where the first message includes the first data and the first length of the first data; and obtain the first data and the first length from the first message.

In a possible implementation, the determining module 1503 is configured to: compare the first free length with the first length to obtain a comparison result, where the comparison result indicates whether the free space in the first data storage region is available for storing the first data; and determine the target data storage region based on the comparison result.

In a possible implementation, the obtaining module 1502 is further configured to obtain, from an information storage region corresponding to the target data storage region, a start address and an occupied length of the target data storage region, where the occupied length is a length of space in which data has been stored in the target data storage region, and the start address is a 1^{st} address of the target data storage region. The determining module 1503 is further configured to determine a storage start address for the first data based on the start address and the occupied length. The storage module 1504 is configured to store the first data by using, as a start point, a location that is in the target data storage region and that is indicated by the storage start address.

In a possible implementation, the obtaining module 1502 is further configured to obtain, from an information storage region corresponding to the target data storage region, a start address and an occupied length of the target data storage region, where the occupied length is a length of space in which data has been stored in the target data storage region, and the start address is a 1^{st} address of the target data storage region. The determining module 1503 is further configured to: determine a storage start address for the first data based on the start address and the occupied length; and determine a storage end address for the first data based on the storage start address and the first length. The storage module 1504 is configured to store the first data by using, as a start point, a location that is in the target data storage region and that is indicated by the storage start address and using, as an end point, a location that is in the target data storage region and that is indicated by the storage end address.

In a possible implementation, when the comparison result is that the first length is less than or equal to the first free length, the target data storage region is the first data storage region, the start address is a start address of the first data storage region, and the occupied length is an occupied length of the first data storage region.

In a possible implementation, when the comparison result is that the first length is greater than the first free length, the target data storage region is the second data storage region, the start address is a start address of the second data storage region, and the occupied length is an occupied length of the second data storage region.

In a possible implementation, the apparatus further includes a removal module. The removal module is configured to remove the first receive unit from the receive queue.

In a possible implementation, the determining module 1503 is further configured to determine a second free length of the target data storage region, where the second free length is a length of free space after the first data is stored in the target data storage region. The removal module is further configured to remove, from the receive queue based on the second free length being less than or equal to a free threshold, a receive unit to which the target data storage region belongs.

In a possible implementation, the apparatus further includes a generation module. The generation module is configured to generate first complete information, where the first complete information indicates that storage of the first data is completed, the first complete information includes at least one of storage start address for the first data, storage end address for the first data, second free length, and removal identifier, the removal identifier indicates whether there is a receive unit removed from the receive queue in the first receive unit or the second receive unit, and the first complete information is used for determining whether to add a third receive unit to the receive queue.

In a possible implementation, the receiving module 1501 is further configured to receive supplementary information, where the supplementary information is determined based on the first complete information. The apparatus further includes an adding module. The adding module is configured to add the third receive unit to the receive queue based on the supplementary information.

In a possible implementation, the first free length is greater than the free threshold.

It should be understood that, when the apparatus provided in FIG. 15 implements functions of the apparatus, beneficial effects of the apparatus are the same as the beneficial effects of the data storage method provided in FIG. 6. Details are not described herein again. When the apparatus provided in FIG. 15 implements the functions of the apparatus, division into the foregoing functional modules is merely used as an example for description. During actual application, the foregoing functions may be allocated to different functional modules for implementation based on requirements. In other words, an internal structure of a device is divided into different functional modules, to implement all or some of the functions described above. In addition, the apparatus provided in the foregoing embodiments and the method embodiments belong to a same concept. For a specific implementation process of the apparatus, refer to the method embodiments. Details are not described herein again.

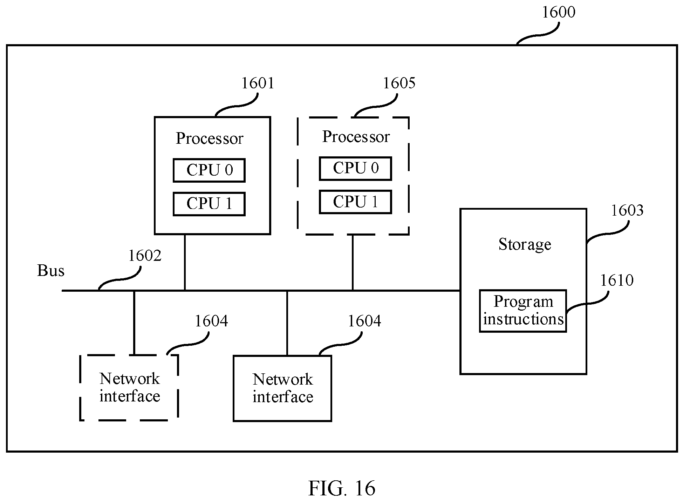

FIG. 16 is a diagram of a structure of an example of a data storage device 1600 according to this application. The data storage device 1600 includes at least one processor 1601, a storage 1603, and at least one network interface 1604.

The processor 1601 is, for example, a general-purpose central processing unit, a digital signal processor (digital signal processor, DSP), a network processor (network processor, NP), a GPU, a neural-network processing unit (neural-network processing unit, NPU), a data processing unit (Data Processing Unit, DPU), a microprocessor, one or more integrated circuits or application-specific integrated circuits (application-specific integrated circuits, ASIC) configured to implement the solutions of this application, a programmable logic device (programmable logic device, PLD), another general-purpose processor or another programmable logic device, a discrete gate, a transistor logic device, a discrete hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The general-purpose processor may be a microprocessor, any conventional processor, or the like. It should be noted that the processor may be a processor that supports an advanced reduced instruction set computing machines (advanced RISC machines, ARM) architecture. The processor may implement or execute various logical blocks, modules, and circuits described with reference to content disclosed in this application. Alternatively, the processor may be a combination of processors implementing a computing function, for example, a combination including one or more microprocessors, or a combination of a DSP and a microprocessor.

Optionally, the data storage device 1600 further includes a bus 1602. The bus 1602 is configured to transfer information between components of the data storage device 1600. The bus 1602 may be a peripheral component interconnect (peripheral component interconnect, PCI for short) bus, an extended industry standard architecture (extended industry standard architecture, EISA for short) bus, or the like. The bus 1602 may be classified into an address bus, a data bus, a control bus, and the like. For ease of representation, only one line is used to represent the bus in FIG. 16, but this does not mean that there is only one bus or only one type of bus.

The storage 1603 is, for example, a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

By way of example rather than limitative description, many forms of ROMs and RAMs are available. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Alternatively, the storage 1603 may be another type of storage device that can store static information and instructions, or may be another type of dynamic storage device that can store information and instructions, or may be another compact disc storage, optical disc storage (including a compact disc, a laser disc, an optical disc, a digital versatile disc, a Blu-ray disc, and the like), magnetic disk storage medium or another magnetic storage device, or any other medium that can be used to carry or store expected program code in a form of instructions or a data structure and that can be accessed by a computer, but is not limited thereto. For example, the storage 1603 exists independently, and is connected to the processor 1601 through the bus 1602. Alternatively, the storage 1603 may be integrated with the processor 1601.

The network interface 1604 is any apparatus like a transceiver, and is configured to communicate with another device or a communication network. The communication network may be an Ethernet, a radio access network (radio access network, RAN), a wireless local area network (wireless local area network, WLAN), or the like. The network interface 1604 may include a wired network interface, and may further include a wireless network interface. Specifically, the network interface 1604 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network interface, or a combination thereof. The Ethernet interface may be an optical interface, an electrical interface, or a combination thereof. In some implementations of this application, the network interface 1604 may be used by the data storage device 1600 to communicate with another device.

During specific implementation, in some implementations, the processor 1601 may include one or more CPUs, for example, a CPU 0 and a CPU 1 shown in FIG. 16. Each of the processors may be a single-core processor or a multi-core processor. The processor herein may be one or more devices, circuits, and/or processing cores configured to process data (for example, computer program instructions).

During specific implementation, in some implementations, the data storage device 1600 may include a plurality of processors, for example, the processor 1601 and a processor 1605 shown in FIG. 16. Each of the processors may be a single-core processor or a multi-core processor. The processor herein may be one or more devices, circuits, and/or processing cores configured to process data (for example, computer program instructions).

In some implementations, the storage 1603 is configured to store program instructions 1610 for executing the solutions of this application, and the processor 1601 may execute the program instructions 1610 stored in the storage 1603. In other words, the data storage device 1600 may implement, by using the processor 1601 and the program instructions 1610 in the storage 1603, the method provided in the method embodiment, that is, the method in FIG. 6. The program instructions 1610 may include one or more software modules. Optionally, the processor 1601 may also store the program instructions for executing the solutions of this application.

In a specific implementation process, the data storage device 1600 in this application may correspond to a first network element device configured to perform the foregoing method. The processor 1601 in the data storage device 1600 reads the instructions in the storage 1603, so that the data storage device 1600 shown in FIG. 16 can perform all or some of the steps in the method embodiment.

The data storage device 1600 may further correspond to the apparatus shown in FIG. 15. Each functional module in the apparatus shown in FIG. 15 is implemented by using software of the data storage device 1600. In other words, the functional modules included in the apparatus shown in FIG. 15 are generated after the processor 1601 of the data storage device 1600 reads the program instructions 1610 stored in the storage 1603.

The steps of the method shown in FIG. 6 are completed by using an integrated logic circuit of hardware in the processor of the data storage device 1600 or by using instructions in a form of software. The steps in the method embodiment disclosed with reference to this application may be directly performed and completed by a hardware processor, or may be performed and completed by using a combination of hardware and a software module in the processor. The software module may be in a mature storage medium in the art, for example, a random access memory, a flash memory, a read-only memory, a programmable read-only memory, an electrically erasable programmable memory, or a register. The storage medium is in the storage, and the processor reads information in the storage, and completes the steps in the method embodiment in combination with the hardware in the processor. To avoid repetition, details are not described herein again.

In an example embodiment, a data storage system is provided. The data storage system includes a receive device and a send device. The receive device is configured to perform the method shown in FIG. 6, and the send device is configured to send data to the receive device.

In an example embodiment, a computer program (product) is provided. The computer program (product) includes computer program code. When the computer program code is run by a computer, the computer is enabled to perform the method shown in FIG. 6.

In an example embodiment, a computer-readable storage medium is provided. The computer-readable storage medium stores a program or instructions. When the program or the instructions are run on a computer, the computer performs the method shown in FIG. 6.

In an example embodiment, a chip is provided, including a processor, and configured to invoke, from a storage, instructions stored in the storage and run the instructions, to enable a computer in which the chip is installed to perform the method shown in FIG. 6.

In an example embodiment, another chip is provided, including an input interface, an output interface, a processor, and a storage. The input interface, the output interface, the processor, and the storage are connected through an internal connection path. The processor is configured to execute code in the storage. When the code is executed, a computer in which the chip is installed performs the method shown in FIG. 6.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

In this application, terms such as "first" and "second" are for distinguishing between same or similar items with basically same roles and functions. It should be understood that there is no logical or timing dependency between "first", "second", and "n^{th}", and neither a quantity nor an execution sequence is limited. It should be further understood that, although the following descriptions use terms such as "first" and "second" to describe various elements, these elements should not be limited by the terms. These terms are simply for distinguishing one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. The terms "system" and "network" are often used interchangeably in this specification.

It should be understood that the terms used in the descriptions of the various examples in this specification are merely intended to describe specific examples and are not intended to constitute a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally represents an "or" relationship between the associated objects.

It should be further understood that the term "if" may be interpreted to mean "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining", or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application shall fall within the protection scope of this application.

## Claims

1. A data storage method, wherein the method comprises:
receiving first data, wherein a length of the first data is a first length;
obtaining a first free length of a first data storage region in a first receive unit, wherein the first free length is a length of free space in the first data storage region;
determining, based on the first free length and the first length, a target data storage region for storing the first data, wherein the target data storage region comprises the first data storage region or a second data storage region in a second receive unit, and the second receive unit and the first receive unit are different receive units in a same receive queue; and
storing the first data in the target data storage region.

2. The method according to claim 1, wherein the first receive unit further comprises a first information storage region, and the first free length is stored in the first information storage region.

3. The method according to claim 1 or 2, wherein the receiving the first data comprises:
receiving a first message, wherein the first message comprises the first data and the first length of the first data; and
obtaining the first data and the first length from the first message.

4. The method according to any one of claims 1 to 3, wherein the determining, based on the first free length and the first length, the target data storage region for storing the first data comprises:
comparing the first free length with the first length to obtain a comparison result, wherein the comparison result indicates whether the free space in the first data storage region is available for storing the first data; and
determining the target data storage region based on the comparison result.

5. The method according to any one of claims 1 to 4, wherein after the determining the target data storage region for storing the first data, the method further comprises:
obtaining, from an information storage region corresponding to the target data storage region, a start address and an occupied length of the target data storage region, wherein the occupied length is a length of space in which data has been stored in the target data storage region, and the start address is a 1^{st} address of the target data storage region; and
determining a storage start address for the first data based on the start address and the occupied length; and
the storing the first data in the target data storage region comprises:
storing the first data by using, as a start point, a location that is in the target data storage region and that is indicated by the storage start address.

6. The method according to any one of claims 1 to 4, after the determining the target data storage region for storing the first data, the method further comprises:
obtaining, from an information storage region corresponding to the target data storage region, a start address and an occupied length of the target data storage region, wherein the occupied length is a length of space in which data has been stored in the target data storage region, and the start address is a 1^{st} address of the target data storage region;
determining a storage start address for the first data based on the start address and the occupied length; and
determining a storage end address for the first data based on the storage start address and the first length; and
the storing the first data in the target data storage region comprises:
storing the first data by using, as a start point, a location that is in the target data storage region and that is indicated by the storage start address and using, as an end point, a location that is in the target data storage region and that is indicated by the storage end address.

7. The method according to any one of claims 4 to 6, wherein when the comparison result is that the first length is less than or equal to the first free length, the target data storage region is the first data storage region, the start address is a start address of the first data storage region, and the occupied length is an occupied length of the first data storage region.

8. The method according to any one of claims 4 to 6, wherein when the comparison result is that the first length is greater than the first free length, the target data storage region is the second data storage region, the start address is a start address of the second data storage region, and the occupied length is an occupied length of the second data storage region.

9. The method according to claim 8, wherein after the comparing the first free length with the first length to obtain the comparison result, the method further comprises:
removing the first receive unit from the receive queue.

10. The method according to any one of claims 1 to 9, wherein after the storing the first data in the target data storage region, the method further comprises:
determining a second free length of the target data storage region, wherein the second free length is a length of free space after the first data is stored in the target data storage region; and
removing, from the receive queue based on the second free length being less than or equal to a free threshold, a receive unit to which the target data storage region belongs.

11. The method according to any one of claims 1 to 10, wherein after the storing the first data in the target data storage region, the method further comprises:
generating first complete information, wherein the first complete information indicates that storage of the first data is completed, the first complete information comprises at least one of storage start address for the first data, storage end address for the first data, second free length, and removal identifier, the removal identifier indicates whether there is a receive unit removed from the receive queue in the first receive unit or the second receive unit, and the first complete information is used for determining whether to add a third receive unit to the receive queue.

12. The method according to claim 11, wherein after the generating the first complete information, the method further comprises:
receiving supplementary information, wherein the supplementary information is determined based on the first complete information; and
adding the third receive unit to the receive queue based on the supplementary information.

13. The method according to any one of claims 1 to 12, wherein the first free length is greater than the free threshold.

14. A data storage apparatus, wherein the apparatus comprises:
a receiving module, configured to receive first data, wherein a length of the first data is a first length;
an obtaining module, configured to obtain a first free length of a first data storage region in a first receive unit, wherein the first free length is a length of free space in the first data storage region;
a determining module, configured to determine, based on the first free length and the first length, a target data storage region for storing the first data, wherein the target data storage region comprises the first data storage region or a second data storage region in a second receive unit, and the second receive unit and the first receive unit are different receive units in a same receive queue; and
a storage module, configured to store the first data in the target data storage region.

15. A data storage device, wherein the device comprises a processor, the processor is coupled to a storage, the storage stores at least one instruction, and the at least one instruction is loaded and executed by the processor, to enable the data storage device to implement the data storage method according to any one of claims 1 to 13.

16. A data storage system, wherein the data storage system comprises a send device and a receive device, the receive device is configured to perform the data storage method according to any one of claims 1 to 13, and the send device is configured to send data to the receive device.

17. A computer-readable storage medium, wherein the computer-readable storage medium stores at least one instruction, and the instruction is loaded and executed by a processor to implement the data storage method according to any one of claims 1 to 13.

18. A computer program product, wherein the computer program product comprises a computer program or instructions, and the computer program or the instructions are executed by a processor, to enable a computer to implement the data storage method according to any one of claims 1 to 13.
